# EUROPEAN PATENT APPLICATION

(11) **EP 4 585 633 A1**
(43) Date of publication of application: **16.07.2025**
(21) Application number: 24785233.8
(22) Date of filing: 03.04.2024
(51) Int. Cl.: C08G 63/91, C08G 63/06, C08G 63/08, C08G 63/82, C08G 63/85

(54) **POLYESTER POLYOL COPOLYMER AND MEHTOD FOR PRODUCING POLYESTER POLYOL COPOLYMER**

(30) Priority: 03.04.2023 KR 20230043731; 02.04.2024 KR 20240044963
(71) Applicant: LG CHEM, LTD., Seoul 07336 (KR)
(72) Inventor: PARK, Sai Bom, Daejeon 34122 (KR); PARK, Hyungil, Daejeon 34122 (KR); LEE, Hokeun, Daejeon 34122 (KR); KANG, Donggyun, Daejeon 34122 (KR); KIM, Chul Woong, Daejeon 34122 (KR)
(74) Representative: Plasseraud IP
(86) International application number: PCT/KR2024/004364
(87) International publication number: WO 2024/210532

(57) **Abstract**

The present disclosure relates to: a polyester polyol copolymer that has excellent mechanical properties along with environmental friendliness and biodegradable properties, and a preparation method of polyester polyol copolymer.

## Description

### [TECHNICAL FIELD]

### CROSS-REFERENCE TO RELATED APPLICATION(S)

This application claims the benefit of Korean Patent Application No. 10-2023-0043731 filed on April 3, 2023 and Korean Patent Application No. 10-2024-0044963 filed on April 2, 2024 in the Korean Intellectual Property Office, the disclosures of which are incorporated herein by reference in their entirety.

The present disclosures relates to a polyester polyol copolymer and a preparation method of polyester polyol copolymer.

### [BACKGROUND]

Polyglycolic acid (PGA), which is a kind of aliphatic polyester, has received attention as an environmentally friendly material having a biodegradable property, and at the same time, having excellent tensile strength and elastic modulus.

Unlike petroleum-based resins previously used, such as polystyrene resins, polyvinyl chloride resins, polyethylene, etc., polyglycolic acid has the effects of preventing the depletion of petroleum resources and suppressing carbon dioxide emission, etc., and therefore, it can reduce environmental pollution, which is a disadvantage of petroleum-based plastic products. Therefore, as the environmental pollution problems caused by waste plastics, etc. have emerged as social problems, efforts are being made to expand the range of application of polyglycolic acid to products where general plastics (petroleum-based resins) have been used, such as food packaging materials and containers, electronic product cases, etc.

However, as compared to existing petroleum-based resins, polyglycolic acid has poor elongation (elongation at break), and thus exhibits the property of being easily broken (brittleness). Therefore, polyglycolic acid has limitations in its processability and is therefore limited in its applicability as a general-purpose resin.

Therefore, there is a need for research into copolymers that have effects of improving elongation properties, etc. while maintaining the mechanical properties of polyglycolic acid.

### [DETAILED DESCRIPTION OF THE INVENTION]

### [Technical Problem]

It is an object of the present disclosure to provide a polyester polyol copolymer that is excellent in biodegradability and exhibits excellent physical properties such as tensile strength and elastic modulus and at the same time, has improved elongation, and a preparation method of polyester polyol copolymer.

### [Technical Solution]

According to one embodiment of the present disclosure, there is provided a polyester polyol copolymer comprising: a repeating unit represented by the following Chemical Formula 1, a repeating unit represented by the following Chemical Formula 2, and a repeating unit represented by the following Chemical Formula 3, wherein the repeating unit represented by Chemical Formula 1 is contained in an amount of 5% by weight or more and 95% by weight or less based on the total repeating units, and wherein the repeating unit represented by Chemical Formula 3 is contained in an amount of 95 parts by weight or less based on 100 parts by weight of the repeating unit represented by Chemical Formula 2: 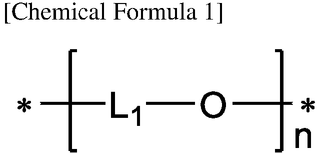
wherein in Chemical Formula 1, the L₁ is an alkylene group having 3 or less carbon atoms, and n is an integer of 3 or more, 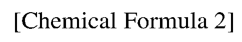 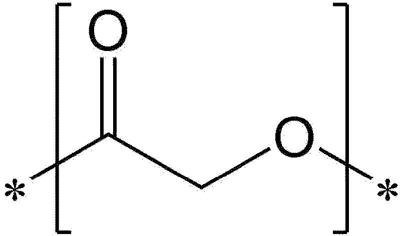 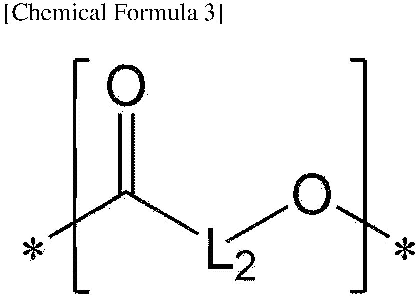
wherein in Chemical Formula 3, the L₂ is an alkylene group having 2 or more carbon atoms.

According to another embodiment of the present disclosure, there is provided a preparation method of a polyester polyol copolymer, comprising: subjecting a glycolide monomer and a monomer represented by the following Chemical Formula 5 to ring-opening polymerization in the presence of a compound represented by the following Chemical Formula 4 to prepare a polyester polyol copolymer, wherein the repeating unit represented by Chemical Formula 5 is contained in an amount of 95 parts by weight or less based on 100 parts by weight of the glycolide monomer: 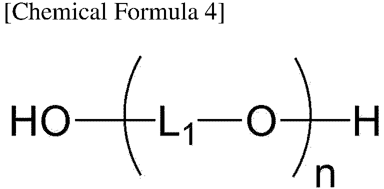
wherein in Chemical Formula 4,the L₁ is an alkylene group having 3 or less carbon atoms, and n is an integer of 5 or more, 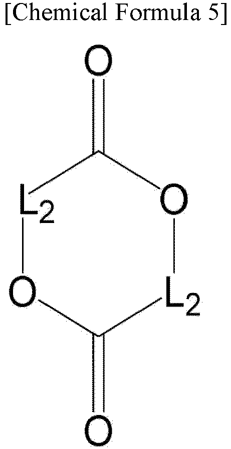
wherein in Chemical Formula 5, the L₂ is an alkylene group having 2 or more carbon atoms.

Now, a polyester polyol copolymer and a preparation method of polyester polyol copolymer according to specific embodiments of the disclosure will be described in more detail.

Unless particularly mentioned herein, the term "including" or "comprising" refers to including some element (or component) without any limitation, and should not be construed as excluding addition of other elements (or components).

In the present disclosure, the terms "the first", "the second", and the like are used to describe a variety of components, and these terms are merely employed to differentiate a certain component from other components.

In addition, if the steps constituting the preparation method described herein are specified as being sequential or continuous, or unless otherwise specified, one step and other steps constituting one preparation method shall not be construed as being limited to the order described herein. Therefore, the order of the steps constituting the preparation method can be changed within a range that can be easily understood by a person skilled in the art, and in this case, the accompanying changes that are obvious to a person skilled in the art are not included in the scope of the present disclosure.

Further, unless otherwise stated herein, the weight average molecular weight can be measured using a gel permeation chromatography(GPC). Specifically, the prepolymer or copolymer is dissolved in chloroform to a concentration of 2 mg/ml, then *20 µ*ℓ of the solution is injected into GPC, and GPC analysis is performed at 40°C. At this time, chloroform is used as the mobile phase for GPC, the flow rate is 1.0 mL/min, and the column used is two Agilent Mixed-B units connected in series. RI Detector is used as a detector. The values of Mw can be obtained using a calibration curve formed using a polystyrene standard sample. Nine kinds of the polystyrene standard samples are used with the molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

In the present disclosure, the copolymer refers to including all of a random copolymer, a block copolymer, a graft copolymer, and the like.

In the present disclosure, the term "block" refers to a polymer including at least two repeating units linked to each other, wherein the repeating units are the same, and the term "block copolymer" refers to a copolymer including at least two types of different blocks linked to each other via a direct bond or via a linking group, wherein one or more blocks are present per each block type.

In the present disclosure, the polyester polyol refers to a polymer that contains an ester group -(C=O)-O- as a repeating unit and has a hydroxy group (-OH) at the end.

According to one embodiment of the disclosure, there is provided a polyester polyol copolymer comprising: the repeating unit represented by Chemical Formula 1, the repeating unit represented by Chemical Formula 2, and the repeating unit represented by Chemical Formula 3, wherein the repeating unit represented by Chemical Formula 3 is contained in an amount of 95 parts by weight or less based on 100 parts by weight of the repeating unit represented by Chemical Formula 2.

The present inventors have found that as the polyester polyol copolymer of the embodiments simultaneously includes the repeating unit represented by Chemical Formula 1, the repeating unit represented by Chemical Formula 2, and the repeating unit represented by Chemical Formula 3, it is possible to simultaneously achieve excellent mechanical properties and elongation, and completed the present disclosure.

Specifically, as the polyester polyol copolymer of the above embodiment simultaneously includes the repeating unit represented by Chemical Formula 1, the repeating unit represented by Chemical Formula 2, and the repeating unit represented by Chemical Formula 3, it is possible to simultaneously achieve the excellent elongation exhibited by the repeating unit represented by Chemical Formula 1 and the excellent mechanical properties exhibited by the repeating unit represented by Chemical Formula 2 and the repeating unit represented by Chemical Formula 3.

Specifically, the polyester polyol copolymer of the one embodiment may include a repeating unit represented by the following Chemical Formula 1, a repeating unit represented by the following Chemical Formula 2, and a repeating unit represented by the following Chemical Formula 3. 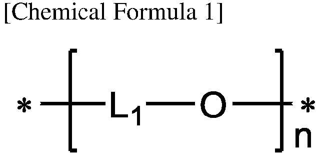 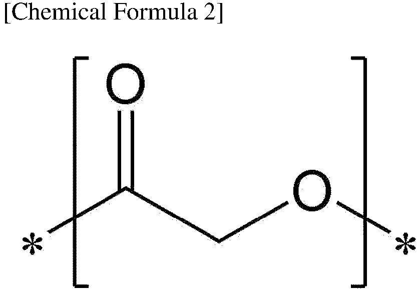 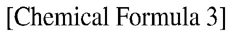 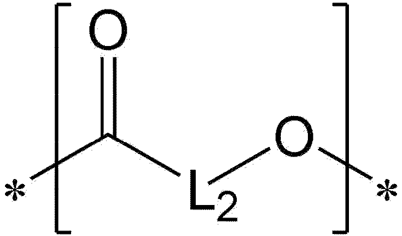 wherein in Chemical Formula 1, the L₁ is an alkylene group having 3 or less carbon atoms, and n is an integer of 3 or more, and in Chemical Formula 3, the L₂ is an alkylene group having 2 or more carbon atoms.

As the conventional polyester polyol copolymer does not contain the repeating unit represented by Chemical Formula 1, it has a problem that due to the high melting point and high crystallinity, conventional general polymer processing methods such as thermoforming and film processing methods are impossible, and thus processability is limited. Unlike conventional polyester polyol copolymers, the polyester polyol copolymer of the one embodiment of the disclosure includes a repeating unit represented by Chemical Formula 1, it has excellent low temperature physical properties and stability against hydrolysis, and at the same time, can realize excellent elongation due to low glass transition temperature.

The copolymer may include all of a random copolymer, a block copolymer, a graft copolymer, etc. For example, the copolymer may be a block copolymer.

The polyester polyol copolymer according to one embodiment of the present disclosure includes a first block containing the repeating unit represented by Chemical Formula 1, and a second block containing the repeating unit represented by Chemical Formula 2, wherein the first block and the second block are bonded by a direct bond, an ester bond, an amide bond, a urethane bond, or a carbonate bond, and therefore, it can compensate for the drawback that the elongation properties of a biodegradable resin containing only polyglycolic acid are lowered. In addition, these polyester polyol copolymers have excellent biodegradability while complementing the mechanical properties of each homopolymer.

That is, in the polyester polyol copolymer of the one embodiment of the disclosure, the repeating unit represented by Chemical Formula 1, the repeating unit represented by Chemical Formula 2, and the repeating unit represented by Chemical Formula 3 may be linked by a direct bond, an ester bond, an amide bond, a urethane bond, a urea bond or a carbonate bond.

Further, in the copolymer of one embodiment of the disclosure, the repeating unit represented by Chemical Formula 2 and the repeating unit represented by Chemical Formula 3 may be linked by a direct bond, an ester bond, an amide bond, a urethane bond, a urea bond, or a carbonate bond.

In Chemical Formula 1, the L₁ may be an alkylene group having 3 or less carbon atoms, and the alkylene group may be substituted or unsubstituted.

Further, in Chemical Formula 1, n may be an integer of 5 or more and 5000 or less.

Specifically, in Chemical Formula 1, n may be an integer of 5 or more, 10 or more, or 5000 or less, 4000 or less, 3000 or less, 2000 or less, 1500 or less, 1000 or less, 500 or less, 100 or less, 50 or less, 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

In Chemical Formula 1, n may mean the number of repetitions in the repeating unit represented by Chemical Formula 1. In Chemical Formula 1, as n is an integer of 5 or more, sufficient elongation can be ensured in comparison with a case where n is less than 5.

Further, n in Chemical Formula 1 being 5 or more can mean that the copolymer of the above embodiment includes a first block containing the repeating unit represented by Chemical Formula 1.

The repeating unit represented by Chemical Formula 1 may be a repeating unit derived from a compound represented by the following Chemical Formula 4. 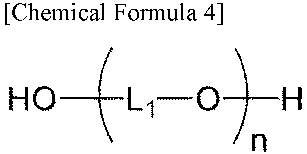 wherein in Chemical Formula 4, the L₁ is an alkylene group having 3 or less carbon atoms, and n is an integer of 5 or more.

Specifically, in Chemical Formula 4, L₁ may be an alkylene group having 3 or less carbon atoms, wherein the alkylene group may be substituted or unsubstituted.

Further, in Chemical Formula 4, n may be an integer of 5 or more and 5000 or less.

Specifically, in Chemical Formula 4, n may be an integer of 5 or more, 10 or more, or 5000 or less, 4000 or less, 3000 or less, 2000 or less, 1500 or less, 1000 or less, 500 or less, 100 or less, 50 or less, or 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

Specifically, the repeating unit represented by Chemical Formula 1 may comprise a repeating unit represented by the following Chemical Formula 1-1: 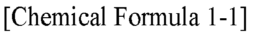 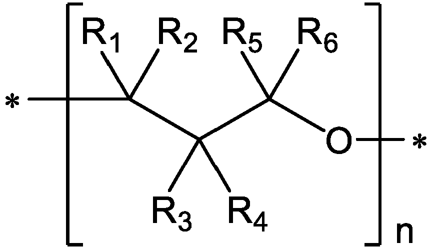 wherein, in Chemical Formula 1-1, R₁ to R₆ are each independently hydrogen or an alkyl group, and n is an integer of 5 or more.

Specifically, in Chemical Formula 1-1, n may be an integer of 5 or more, 10 or more, or 5000 or less, 4000 or less, 3000 or less, 2000 or less, 1500 or less, 1000 or less, 500 or less, 100 or less, 50 or less, or 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

As the polyester polyol copolymer of one embodiment of the disclosure includes a repeating unit represented by Chemical Formula 1-1, it has excellent low-temperature physical properties and stability against hydrolysis, and simultaneously allows high-temperature thermoforming, such as polymer processing method, thermoforming and film processing method and thus can achieve excellent processability. In addition, the crystallinity is reduced due to the low glass transition temperature, thereby making it possible to achieve excellent elongation and excellent processability.

Meanwhile, as the polyester polyol copolymer of one embodiment of the disclosure includes a repeating unit represented by Chemical Formula 2, it is possible to achieve excellent mechanical properties.

The repeating unit represented by Chemical Formula 2 may be a repeating unit derived from a glycolide monomer.

When the compound represented by Chemical Formula 4 is introduced into a comonomer of the glycolide monomer, various physical properties of glycolide can be improved, but the physical properties may appear differently depending on the linking structure of each repeating unit and the degree to which each repeating unit is introduced. Therefore, the polyester polyol copolymer of one embodiment of the disclosure can adjust mechanical properties while maintaining the physical properties inherent to glycolide by adjusting the linking structure of each repeating unit and the degree of introduction of the repeating unit represented by Chemical Formula 1.

The copolymer may include a repeating unit represented by the following Chemical Formula 7. 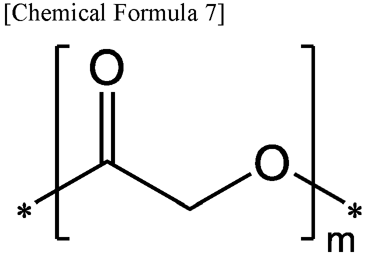 wherein in Chemical Formula 7, m is an integer of 2 or more.

Including a repeating unit represented by Chemical Formula 7 where m is an integer of 2 or more may mean that the copolymer of the above embodiment includes a second block including the repeating unit represented by Chemical Formula 2.

Alternatively, the polyester polyol copolymer may include a repeating unit represented by the following Chemical Formula 3. 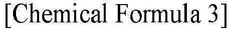 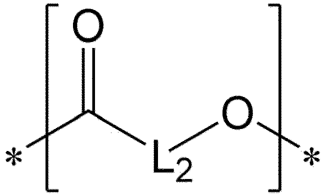 wherein in Chemical Formula 3, L₂ is an alkylene group having 2 or more carbon atoms.

That is, the polyester polyol copolymer may include the repeating unit represented by Chemical Formula 1, the repeating unit represented by Chemical Formula 2, and the repeating unit represented by Chemical Formula 3.

As the polyester polyol copolymer includes the repeating unit represented by Chemical Formula 3, the processability can be improved, the biodegradability rate can be adjusted, and analysis of the material can be facilitated.

The repeating unit represented by Chemical Formula 3 may be a repeating unit derived from a compound represented by the following Chemical Formula 5. 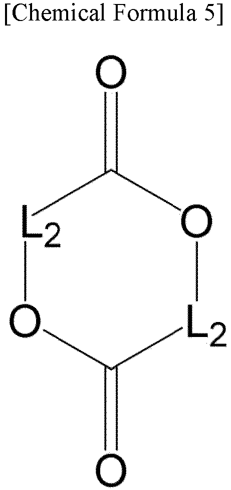 wherein in Chemical Formula 5, L₂ is an alkylene group having 2 or more carbon atoms.

The polyester polyol copolymer including the repeating unit represented by Chemical Formula 3 can be prepared by subjecting the compound represented by Chemical Formula 4, glycolide, and the compound represented by Chemical Formula 5 to ring-opening polymerization.

Specifically, the repeating unit represented by Chemical Formula 3 may include a repeating unit represented by the following Chemical Formula 3-1.

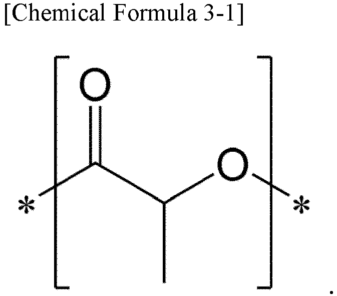

The repeating unit represented by Chemical Formula 3-1 may be a repeating unit derived from a lactide monomer.

The copolymer may include a repeating unit represented by the following Chemical Formula 8. 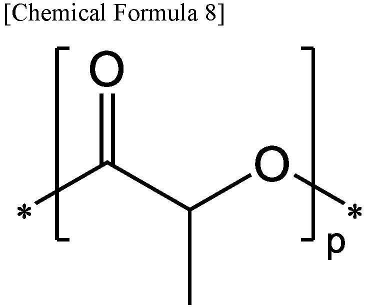 wherein in Chemical Formula 8, p is an integer of 2 or more.

Including a repeating unit represented by Chemical Formula 8 where p is an integer of 2 or more may mean that the copolymer of the above embodiment includes a third block including the repeating unit represented by Chemical Formula 3.

The polyester polyol copolymer of the above embodiment may contain the repeating unit represented by Chemical Formula 1 in an amount of 5% by weight or more and 95% by weight or less, based on the total repeating units.

As the polyester polyol copolymer of the above embodiment contains the repeating unit represented by Chemical Formula 1 in an amount of 5% by weight or more and 95% by weight or less, based on the total repeating units, it can improve elongation while maintaining excellent mechanical properties, and thus simultaneously achieve excellent mechanical properties and elongation.

Specifically, the polyester polyol copolymer of the above embodiment may contain the repeating unit represented by Chemical Formula 1 in an amount of 5% by weight or more, 10% by weight or more, 15% by weight or more, 20% by weight or more, or 95% by weight or less, 90% by weight or less, 80% by weight or less, 75% by weight or less, 50% by weight or less, 5% by weight or more 95% by weight or less, 5% by weight or more 90% by weight or less, 5% by weight or more and 80% by weight or less, 5% by weight or more and 75% by weight or less, 5% by weight or more and 50% by weight or less, 10% by weight or more and 95% by weight or less, 10% by weight or more and 90% by weight or less, 10% by weight or more and 80% by weight or less, 10% by weight or more and 75% by weight or less, 10% by weight or more and 50% by weight or less, 15% by weight or more and 95% by weight or less, 15% by weight or more and 90% by weight or less, 15% by weight or more and 80% by weight or less, 15% by weight or more and 75% by weight or less, 15% by weight or more and 50% by weight or less, 20% by weight or more and 95% by weight or less, 20% by weight or more and 90% by weight or less, 20% by weight or more and 80% by weight or less, 20% by weight or more and 75% by weight or less, or 20% by weight or more and 50% by weight or less, based on the total repeating units.

As the polyester polyol copolymer of the above embodiment contains the repeating unit represented by Chemical Formula 1 in an amount of 5% by weight or more and 95% by weight or less based on the total repeating units, it can simultaneously realize excellent mechanical properties and elongation.

If the polyester polyol copolymer contains the repeating unit represented by Chemical Formula 1 in an amount of less than 5% by weight based on the total repeating units, the elongation may be poor and thus the processability may be limited. If it contains the repeating unit represented by Chemical Formula 1 in an amount of greater than 95% by weight based on the total repeating units, the mechanical properties may be deteriorated.

Meanwhile, the polyester polyol copolymer may contain the repeating unit represented by Chemical Formula 3 in an amount of 0.01 mole or more and less than 0.25 mole per one mole of the repeating unit represented by Chemical Formula 2.

Specifically, the polyester polyol copolymer may contain the repeating unit represented by Chemical Formula 3 in an amount of 0.01 mole or more and less than 0.25 mole, 0.01 mole or more and 0.24 mole or less, 0.01 mole or more and 0.2 mole or less, 0.05 mole or more and less than 0.25 mole, 0.05 mole or more and 0.24 mole or less, 0.05 mole or more and 0.2 mole or less, 0.08 mole or more and less than 0.25 mole, 0.08 mole or more and 0.24 mole or less, or 0.08 mole or more and 0.2 mole or less per one mole of the repeating unit represented by Chemical Formula 2.

If the polyester polyol copolymer contains the repeating unit represented by Chemical Formula 3 in an amount of less than 0.01 mole per one mole of the repeating unit represented by Chemical Formula 2, the processability may decrease or the rate of biodegradation may not be adjustable, and if the content is 0.25 mol or more, the mechanical properties may deteriorate as the degree of crystallinity decreases.

Meanwhile, the polyester polyol copolymer may contain the repeating unit represented by Chemical Formula 2 in an amount of 10 moles or more per one mole of the repeating unit represented by Chemical Formula 1.

More specifically, the polyester polyol copolymer may contain the repeating unit represented by Chemical Formula 2 in an amount of 10 moles or more, 20 moles or more, 30 moles or more, 40 moles or more, 45 moles or more, 200 moles or less, 150 moles or less, 100 moles or less, 10 moles or more and 200 moles or less, 20 moles or more and 200 moles or less, 30 moles or more and 200 moles or less, 40 moles or more and 200 moles or less, 45 moles or more and 200 moles or less, 10 moles or more and 150 moles or less, 20 moles or more and 150 moles or less, 30 moles or more and 150 moles or less, 40 moles or more and 150 moles or less, 45 moles or more and 150 moles or less, 10 moles or more and 100 moles or less, 20 moles or more and 100 moles or less, 30 moles or more and 100 moles or less, 40 moles or more and 100 moles or less, or 45 moles or more and 100 moles or less per one mole of the repeating unit represented by Chemical Formula 1.

As the polyester polyol contains the repeating unit represented by Chemical Formula 2 in an amount of 10 moles or more per one mole of the repeating unit represented by Chemical Formula 1, it is possible to achieve excellent mechanical properties.

If the polyester polyol copolymer contains the repeating unit represented by Chemical Formula 2 in an amount of less than 10 moles per one mole of the repeating unit represented by Chemical Formula 1, the mechanical properties of the prepared polyester polyol copolymer may deteriorate.

Further, the polyester polyol copolymer may contain the repeating unit represented by Chemical Formula 3 in an amount of 1.1 moles or more per one mole of the repeating unit represented by Chemical Formula 1.

More specifically, the polyester polyol copolymer may contain the repeating unit represented by Chemical Formula 3 in an amount of 1.1 moles or more, 1.5 moles or more, 2.0 moles or more, 3 moles or more, 5 moles or more, 50 moles or less, 40 moles or less, 20 moles or less, 10 moles or less, 1.1 moles or more and 50 moles or less, 1.5 moles or more and 50 moles or less, 2.0 moles or more and 50 moles or less, 3 moles or more and 50 moles or less, 5 moles or more and 50 moles or less, 1.1 moles or more and 40 moles or less, 1.5 moles or more and 40 moles or less, 2.0 moles or more and 40 moles or less, 3 moles or more and 40 moles or less, 5 moles or more and 40 moles or less, 1.1 moles or more and 20 moles or less, 1.5 moles or more and 20 moles or less, 2.0 moles or more and 20 moles or less, 3 moles or more and 20 moles or less, 5 moles or more and 20 moles or less, 1.1 moles or more and 10 moles or less, 1.5 moles or more and 10 moles or less, 2.0 moles or more and 10 moles or less, 3 moles or more and 10 moles or less, or 5 moles or more and 10 moles or less, per one mole of the repeating unit represented by Chemical Formula 1.

As the polyester polyol copolymer contains the repeating unit represented by Chemical Formula 3 in an amount of 1.1 moles or more per one mole of the repeating unit represented by Chemical Formula 1, it is possible to achieve excellent mechanical properties.

If the polyester polyol copolymer contains the repeating unit represented by Chemical Formula 3 in an amount of less than 1.1 moles per one mole of the repeating unit represented by Chemical Formula 1, the mechanical properties of the prepared polyester polyol copolymer may deteriorate.

Further, the polyester polyol copolymer may contain the repeating unit represented by Chemical Formula 3 in an amount of 95 parts by weight or less based on 100 parts by weight of the repeating unit represented by Chemical Formula 2.

Specifically, the polyester polyol copolymer may contain the repeating unit represented by Chemical Formula 3 in an amount of 1 part by weight or more, 5 parts by weight or more, 10 parts by weight or more, 95 parts by weight or less, 90 parts by weight or less, 75 parts by weight or less, 50 parts by weight or less, 30 parts by weight or less, 25 parts by weight or less, 1 part by weight or more 95 parts by weight or less, 1 part by weight or more 90 parts by weight or less, 1 part by weight or more and 75 parts by weight or less, 1 part by weight or more and 50 parts by weight or less, 1 part by weight or more and 30 parts by weight or less, 1 part by weight or more and 25 parts by weight or less, 5 parts by weight or more and 95 parts by weight or less, 5 parts by weight or more and 90 parts by weight or less, 5 parts by weight or more and 75 parts by weight or less, 5 parts by weight or more and 50 parts by weight or less, 5 parts by weight or more and 30 parts by weight or less, 5 parts by weight or more and 25 parts by weight or less, 10 parts by weight or more and 95 parts by weight or less, 10 parts by weight or more and 90 parts by weight or less, 10 parts by weight or more and 75 parts by weight or less, 10 parts by weight or more and 50 parts by weight or less, 10 parts by weight or more and 30 parts by weight or less, or 10 parts by weight or more and 25 parts by weight or less, based on 100 parts by weight of the repeating unit represented by Chemical Formula 2.

As the polyester polyol copolymer contains the repeating unit represented by Chemical Formula 3 in an amount of 95 parts by weight or less based on 100 parts by weight of the repeating unit represented by Chemical Formula 2, it is possible to realize the effects of improving heat resistance and biodegradability and improving moisture and gas barrier properties.

In addition, the copolymer may include a structure in which any one selected from the repeating unit represented by Chemical Formula 7 and the repeating unit represented by Chemical Formula 8 is bonded to both ends of the functional group represented by the following Chemical Formula 9.

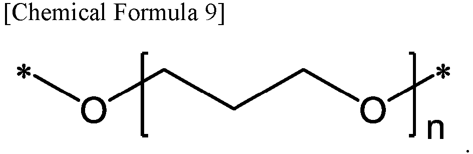

Specifically, the copolymer may include a structure in which the repeating unit represented by Chemical Formula 7 is bonded to both ends of the functional group of Chemical Formula 9, or a structure in which the repeating unit represented by Chemical Formula 8 is bonded to both ends of the functional group of Chemical Formula 9, or a structure in which the repeating unit represented by Chemical Formula 7 and the repeating unit represented by Chemical Formula 8 are bonded to both ends of the functional group of Chemical Formula 9, respectively.

More specifically, the copolymer may include any one selected from the repeating units represented by the following Chemical Formulas 10-1 to 10-3.

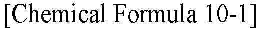

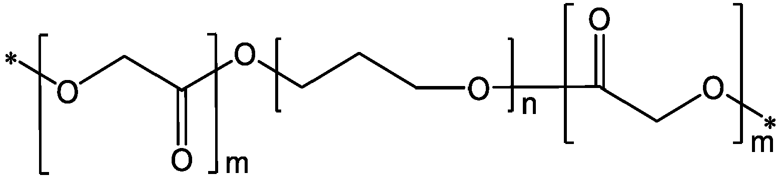

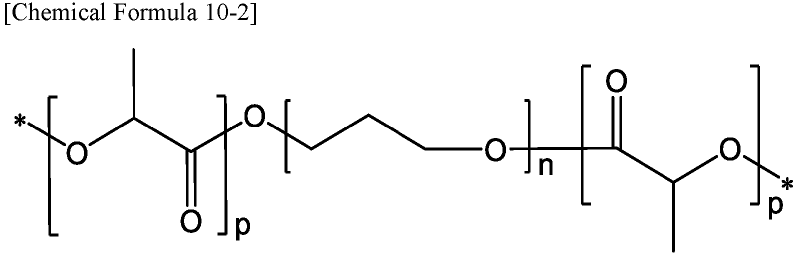

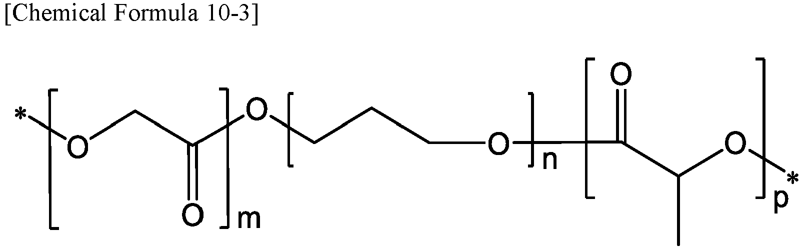

For example, the copolymer may include a copolymer represented by the following Chemical Formulas 11-1 to 11-3.

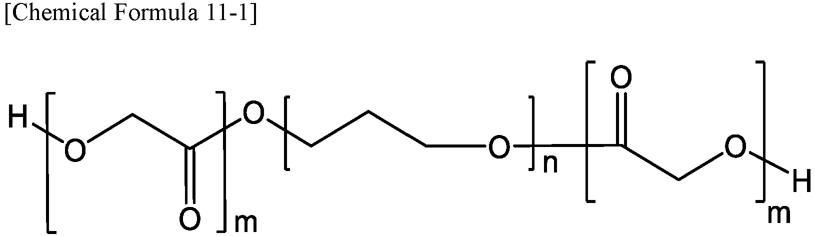

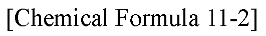

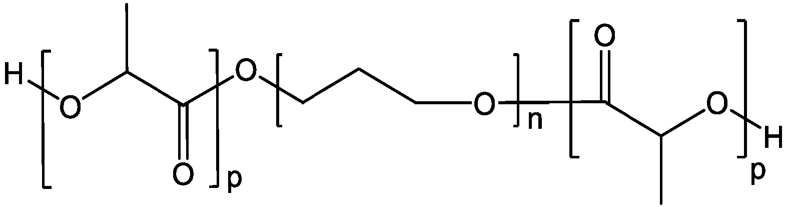

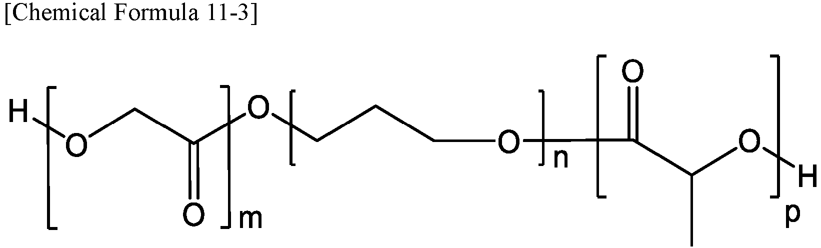

The polyester polyol copolymer may have a weight average molecular weight (Mw) of 10,000 g/mol or more and 500,000 g/mol or less, which is measured using a gel permeation chromatography (GPC).

Specifically, the polyester polyol copolymer may have a weight average molecular weight (Mw) of 10,000 g/mol or more, 15,000 g/mol or more, 20,000 g/mol or more, 30,000 g/mol or more, 35,000 g/mol or more, 500,000 g/mol or less, 400,000 g/mol or less, 300,000 g/mol or less, 200,000 g/mol or less, 100,000 g/mol or less, and 10,000 g/mol or more and 500,000 g/mol or less, 15,000 g/mol or more and 500,000 g/mol or less, 20,000 g/mol or more and 500,000 g/mol or less, 30,000 g/mol or more and 500,000 g/mol or less, 35,000 g/mol or more and 500,000 g/mol or less, 10,000 g/mol or more and 400,000 g/mol or less, 15,000 g/mol or more and 400,000 g/mol or less, 20,000 g/mol or more and 400,000 g/mol or less, 30,000 g/mol or more and 400,000 g/mol or less, 35,000 g/mol or more and 400,000 g/mol or less, 10,000 g/mol or more and 300,000 g/mol or less, 15,000 g/mol or more and 300,000 g/mol or less, 20,000 g/mol or more and 300,000 g/mol or less, 30,000 g/mol or more and 300,000 g/mol or less, 35,000 g/mol or more and 300,000 g/mol or less, 10,000 g/mol or more and 200,000 g/mol or less, 15,000 g/mol or more and 200,000 g/mol or less, 20,000 g/mol or more and 200,000 g/mol or less, 30,000 g/mol or more and 200,000 g/mol or less, 35,000 g/mol or more and 200,000 g/mol or less, 10,000 g/mol or more and 100,000 g/mol or less, 15,000 g/mol or more and 100,000 g/mol or less, 20,000 g/mol or more and 100,000 g/mol or less, 30,000 g/mol or more and 100,000 g/mol or less, or 35,000 g/mol or more and 100,000 g/mol or less, which are measured using a gel permeation chromatography (GPC).

Meanwhile, the polyester polyol copolymer of one embodiment of the disclosure may have a tensile elongation of 150% or more.

Specifically, the polyester polyol copolymer of one embodiment of the disclosure has a tensile elongation of 150% or more, 200 % or more, 250 % or more, 10000 % or less, 5000 % or less, 1000 % or less, 500 % or less, 300 % or less, 150% or more and 10000 % or less, 150% or more and 5000 % or less, 150% or more and 1000 % or less, 150% or more and 500 % or less, 150% or more and 300 % or less, 200% or more and 10000 % or less, 200% or more and 5000 % or less, 200% or more and 1000 % or less, 200% or more and 500 % or less, 200% or more and 300 % or less, 250% or more and 10000 % or less, 250% or more and 5000 % or less, 250% or more and 1000 % or less, 250% or more and 500 % or less, or 250% or more and 300 % or less.

The method of measuring the tensile elongation is not particularly limited, but can be measured, for example, according to ASTM D638. More specifically, ASTM D536 V Type specimens was manufactured using a hot-press device at 190°C to 200°C, and then measurement can be performed using a UTM device under a load of 10 mm/s, 60 kg/f.

The polyester polyol copolymer of one embodiment of the disclosure may be a biodegradable polyester polyol copolymer that exhibits biodegradability.

In the present disclosure, a biodegradable resin or a biodegradable (co)polymer means a resin or (co)polymer that causes natural degradation when exposed to the outside. Specifically, it may refer to a resin or a (co)polymer that is degraded by 20% by weight or more based on the weight of the initial resin or (co)polymer when exposed to the external environment at room temperature (10°C to 30°C) for 30 days or more.

That is, the polyester polyol copolymer of the above embodiment may cause natural degradation when exposed to the outside, and specifically, may be degraded by more than 20% by weight when exposed to the external environment at room temperature (10°C to 30°C) for more than 30 days.

The method of measuring biodegradability is not particularly limited, but for example, the moisture content in aerobic compost is set to a level of 40% or more and 70% or less at room temperature (10°C to 30°C), the compost and a resin or a (co)polymer are then mixed at a weight ratio of 10:1, and measurement can be performed by calculating the ratio of the mass degraded into water and CO₂ based on the initial mass of the sample with the lapse of time.

According to another embodiment of the disclosure, there can be provided a method for preparing a polyester polyol copolymer, the method comprising subjecting a glycolide monomer and a monomer represented by the following Chemical Formula 5 to ring-opening polymerization in the presence of a compound represented by the following Chemical Formula 4 to prepare a polyester polyol copolymer, wherein the monomer represented by Chemical Formula 5 is contained in an amount of 95 parts by weight or less based on 100 parts by weight of the glycolide monomer. 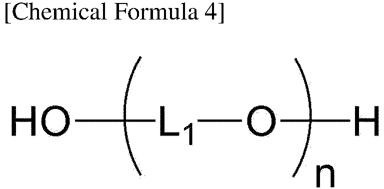
wherein in Chemical Formula 4, the L₁ is an alkylene group having 3 or less carbon atoms, and n is an integer of 5 or more, 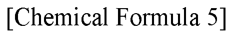 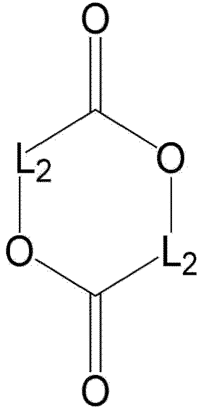
wherein in Chemical Formula 5, the L₂ is an alkylene group having 2 or more carbon atoms.

Specifically, in Chemical Formula 4, the L₁ may be an alkylene group having 3 or less carbon atoms, wherein the alkylene group may be substituted or unsubstituted.

Further, in Chemical Formula 4, n may be an integer of 5 or more and 5000 or less.

Specifically, in Chemical Formula 4, n may be an integer of 5 or more, 10 or more, or 5000 or less, 4000 or less, 3000 or less, 2000 or less, 1500 or less, 1000 or less, 500 or less, 100 or less, 50 or less, 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

Specifically, the repeating unknit represented by Chemical Formula 4 may include a compound represented by the following Chemical Formula 4-1. 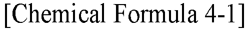 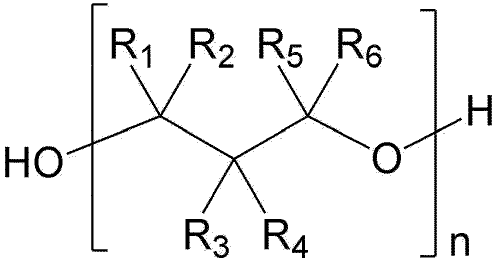 wherein, in Chemical Formula 4-1, R₁ to R₆ are each independently hydrogen or an alkyl group, and n is an integer of 5 or more.

In the preparation method of the polyester polyol copolymer according to the above embodiment, the polyester polyol copolymer may include a repeating unit derived from the compound represented by Chemical Formula 4 in an amount of 5% by weight or more and 95% by weight or less based on the all repeating units.

The repeating unit derived from the compound represented by Chemical Formula 4 may be a repeating unit represented by Chemical Formula 1.

Specifically, the polyester polyol copolymer according to the above embodiment may include the repeating unit derived from the compound represented by Chemical Formula 4 in an amount of 5% by weight or more, 10% by weight or more, 15% by weight or more, 20% by weight or more, or 95% by weight or less, 90% by weight or less, 80% by weight or less, 75% by weight or less, 50% by weight or less, 5% by weight or more and 95% by weight or less, 5% by weight or more and 90% by weight or less, 5% by weight or more and 80% by weight or less, 5% by weight or more and 75% by weight or less, 5% by weight or more and 50% by weight or less, 10% by weight or more and 95% by weight or less, 10% by weight or more and 90% by weight or less, 10% by weight or more and 80% by weight or less, 10% by weight or more and 75% by weight or less, 10% by weight or more and 50% by weight or less, 15% by weight or more and 95% by weight or less, 15% by weight or more and 90% by weight or less, 15% by weight or more and 80% by weight or less, 15% by weight or more and 75% by weight or less, 15% by weight or more and 50% by weight or less, 20% by weight or more and 95% by weight or less, 20% by weight or more and 90% by weight or less, 20% by weight or more and 80% by weight or less, 20% by weight or more and 75% by weight or less, or 20% by weight or more and 50% by weight or less, based on the all repeating units.

As the polyester polyol copolymer prepared according to the preparation method of the polyester polyol copolymer of the above embodiment includes a repeating unit derived from the compound represented by Chemical Formula 4 in an amount of 5% by weight or more and 95% by weight or less based on the total repeating units, it is possible to simultaneously achieve excellent mechanical properties and elongation.

If the polyester polyol copolymer contains less than 5% by weight of the repeating unit represented by Chemical Formula 1 based on the total repeating units, the elongation is poor and thus the processability may be limited. If the repeating unit represented by Chemical Formula 1 is included in an amount of greater than 95% by weight based on the total repeating units, the mechanical properties may deteriorate.

The molar content of the repeating unit derived from the compound represented by Chemical Formula 4 can be realized by adjusting the ratio of each monomer used in the polyester polyol copolymer of the above embodiment.

If the weight ratio of the compound represented by Chemical Formula 4 and the glycolide monomer is less than 1:99, the elongation is poor and thus the processability may be limited. If the weight ratio of the compound represented by Chemical Formula 4 and the glycolide monomer is greater than 99:1, the mechanical properties of the prepared polyester polyol copolymer may deteriorate.

The compound represented by Chemical Formula 4 may have a weight average molecular weight (Mw) of 500 g/mol to 10,000 g/mol as measured using a gel permeation chromatography (GPC).

Specifically, the compound represented by Chemical Formula 4 may have a weight average molecular weight (Mw) of 500 g/mol or more, 700 g/mol or more, 800 g/mol or more, 1000 g/mol or more, 10,000 g/mol or less, 5000 g/mol or less, 2000 g/mol or less, or 1500 g/mol or less, or may be 500 g/mol or more and 10,000 g/mol or less, 700 g/mol or more and 10,000 g/mol or less, 800 g/mol or more and 10,000 g/mol or less, 1000 g/mol or more and 10,000 g/mol or less, 500 g/mol or more and 5,000 g/mol or less, 700 g/mol or more and 5,000 g/mol or less, 800 g/mol or more and 5,000 g/mol or less, 1000 g/mol or more and 5,000 g/mol or less, 500 g/mol or more and 2,000 g/mol or less, 700 g/mol or more and 2,000 g/mol or less, 800 g/mol or more and 2,000 g/mol or less, 1000 g/mol or more and 2,000 g/mol or less, 500 g/mol or more and 1500 g/mol or less, 700 g/mol or more and 1500 g/mol or less, 800 g/mol or more and 1500 g/mol or less, or 1000 g/mol or more and 1500 g/mol or less, which are measured using a gel permeation chromatography (GPC).

The step of subjecting a glycolide monomer to ring-opening polymerization in the presence of a compound represented by Chemical Formula 4 to prepare a polyester polyol copolymer can be carried out by as a bulk polymerization substantially free from a solvent. At this time, substantially free from a solvent may include the use of a small amount of solvent for dissolving the catalyst, for example, up to less than 1 ml of the solvent per 1 kg of the monomer used. As the of subjecting a glycolide monomer to ring-opening polymerization in the presence of a compound represented by Chemical Formula 4 to prepare a copolymer is carried out by as a bulk polymerization, it is possible to omit the step of removing the solvent after polymerization, and degradation or loss of resin during such a solvent removal process can also be suppressed.

In addition, in the preparation method of the polyester polyol copolymer, the monomer represented by Chemical Formula 5 may be contained in an amount of 95 parts by weight or less based on 100 parts by weight of the glycolide monomer.

Preferably, in the preparation method of the polyester polyol copolymer, the monomer represented by Chemical Formula 5 may be contained in an amount of 1 part by weight or more, 5 parts by weight or more, 10 parts by weight or more, 95 parts by weight or less, 90 parts by weight or less, 75 parts by weight or less, 50 parts by weight or less, 30 parts by weight or less, 20 parts by weight or less, 1 part by weight or more and 95 parts by weight or less, 1 part by weight or more and 90 parts by weight or less, 1 part by weight or more and 75 parts by weight or less, 1 part by weight or more and 50 parts by weight or less, 1 part by weight or more and 30 parts by weight or less, 1 part by weight or more and 20 parts by weight or less, 5 parts by weight or more and 95 parts by weight or less, 5 parts by weight or more and 90 parts by weight or less, 5 parts by weight or more and 75 parts by weight or less, 5 parts by weight or more and 50 parts by weight or less, 5 parts by weight or more and 30 parts by weight or less, 5 parts by weight or more and 20 parts by weight or less, 10 parts by weight or more and 95 parts by weight or less, 10 parts by weight or more and 90 parts by weight or less, 10 parts by weight or more and 75 parts by weight or less, 10 parts by weight or more and 50 parts by weight or less, 10 parts by weight or more and 30 parts by weight or less, or 10 parts by weight or more and 20 parts by weight or less, based on 100 parts by weight of the glycolide monomer.

As the monomer represented by Chemical Formula 5 is contained in an amount of 95 parts by weight or less based on 100 parts by weight of the glycolide monomer, it is possible to realize the effects of improving the heat resistance and biodegradability of the prepared polyester polyol copolymer, and improving the moisture and gas barrier properties.

Meanwhile, the preparation method of the polyester polyol copolymer involves a ring-opening polymerization reaction of glycolide, and therefore, is carried out in the presence of a glycolide ring-opening catalyst. Preferably, the step of subjecting a glycolide monomer and a monomer represented by Chemical Formula 5 to ring-opening polymerization in the presence of a compound represented by Chemical Formula 4 to prepare a polyester polyol copolymer may be carried out in the presence of a catalyst represented by the following Chemical Formula 6.

[Chemical Formula 6] MA¹ₚA²₂₋ₚ

wherein in Chemical Formula 6, M is Al, Mg, Zn, Ca, Sn, Fe, Y, Sm, Lu, Ti or Zr, and
p is an integer of 0 to 2, and A¹ and A² are each independently an alkoxy group or a carboxyl group. For example, the catalyst represented by Chemical Formula 4 may be tin(II) 2-ethylhexanoate (Sn(Oct)₂).

In the step of subjecting a glycolide monomer and the monomer represented by Chemical Formula 5 to ring-opening polymerization in the presence of the compound represented by Chemical Formula 4 to prepare a polyester polyol copolymer, the catalyst represented by Chemical Formula 6 may contained in an amount of 0.001 parts by weight or less based on total 100 parts by weight of the compound represented by Chemical Formula 4, the glycolide monomer, and the monomer represented by Chemical Formula 5.

Specifically, in the step of subjecting a glycolide monomer and the monomer represented by Chemical Formula 5 to ring-opening polymerization in the presence of the compound represented by Chemical Formula 4 to prepare a polyester polyol copolymer, the catalyst represented by Chemical Formula 6 may be contained in an amount of 0.0001 part by weight or more, 0.0002 part by weight or more, 0.0003 part by weight or more, 0.0004 part by weight or more, 0.001 part by weight or less, 0.0008 part by weight or less, 0.0005 part by weight or less, 0.0001 part by weight or more and 0.001 part by weight or less, 0.0002 part by weight or more and 0.001 part by weight or less, 0.0003 part by weight or more and 0.001 part by weight or less, 0.0004 part by weight or more and 0.001 part by weight or less, 0.0001 part by weight or more and 0.0008 part by weight or less, 0.0002 part by weight or more and 0.0008 part by weight or less, 0.0003 part by weight or more and 0.0008 part by weight or less, 0.0004 part by weight or more and 0.0008 part by weight or less, 0.0001 part by weight or more and 0.0005 part by weight or less, 0.0002 part by weight or more and 0.0005 part by weight or less, 0.0003 part by weight or more and 0.0005 part by weight or less, or 0.0004 part by weight or more and 0.0005 part by weight or less, based on total 100 parts by weight of the compound represented by Chemical Formula 4, the glycolide monomer, and the monomer represented by Chemical Formula 5.

In the step of subjecting a glycolide monomer and the monomer represented by Chemical Formula 5 to ring-opening polymerization in the presence of the compound represented by Chemical Formula 4 to prepare a polyester polyol copolymer, the catalyst represented by Chemical Formula 6 is contained in an amount of 0.001 parts by weight or less based on total 100 parts by weight of the compound represented by Chemical Formula 4, the glycolide monomer, and the monomer represented by Chemical Formula 5, the content of impurities in the prepared polyester polyol copolymer is minimized, and thus excellent tensile elongation of 100% or more can be achieved.

In the preparation method of the polyester polyol copolymer, an additive containing a catalyst represented by Chemical Formula 6 may be contained in an amount of 0.0001 part by weight or more, 0.0002 part by weight or more, 0.0003 part by weight or more, 0.0004 part by weight or more, 0.001 part by weight or less, 0.0008 part by weight or less, 0.0005 part by weight or less, 0.0001 part by weight or more and 0.001 part by weight or less, 0.0002 part by weight or more and 0.001 part by weight or less, 0.0003 part by weight or more and 0.001 part by weight or less, 0.0004 part by weight or more and 0.001 part by weight or less, 0.0001 part by weight or more and 0.0008 part by weight or less, 0.0002 part by weight or more and 0.0008 part by weight or less, 0.0003 part by weight or more and 0.0008 part by weight or less, 0.0004 part by weight or more and 0.0008 part by weight or less, 0.0001 part by weight or more and 0.0005 part by weight or less, 0.0002 part by weight or more and 0.0005 part by weight or less, 0.0003 part by weight or more and 0.0005 part by weight or less, 0.0004 part by weight or more and 0.0005 part by weight or less, based on total 100 parts by weight of the compound represented by Chemical Formula 4, the glycolide monomer, and the monomer represented by Chemical Formula 5.

In the preparation method of the polyester polyol copolymer, as an additive such as a catalyst represented by Chemical Formula 6 may be contained in an amount of 0.001 part by weight or less, based on total 100 parts by weight of the compound represented by Chemical Formula 4, the glycolide monomer, and the monomer represented by Chemical Formula 5, the content of impurities in the prepared polyester polyol copolymer is minimized, and thus excellent tensile elongation of 100% or more can be achieved.

Preferably, in the preparation method of the polyester polyol copolymer, the step of subjecting a glycolide monomer and the monomer represented by Chemical Formula 5 to ring-opening polymerization in the presence of the compound represented by Chemical Formula 4 to prepare a polyester polyol copolymer is carried out at a temperature of 150°C to 200°C. Preferably, the step of subjecting a glycolide monomer and the monomer represented by Chemical Formula 5 to ring-opening polymerization in the presence of the compound represented by Chemical Formula 4 to prepare a polyester polyol copolymer is carried out for 5 minutes to 10 hours, more preferably for 10 minutes to 1 hour.

According to one embodiment of the disclosure, there can be provided a molded article molded from a resin composition comprising the above polyester polyol copolymer. The resin composition comprising the copolymer may further include other additives for improving the physical properties in addition to the polyester polyol copolymer.

The molded article may comprise one or more molded articles selected from the group consisting of an injection-molded article, an extrusion-molded article, an inflation-molded article, a fiber, a nonwoven fabric, a foaming body, a film, and a sheets.

The uses of the molded article are not particularly limited, but for example, the molded article may be an electronic material, a building material, a food packaging, a food container (disposable cup, tray, etc.), an industrial article, an agricultural article (e.g., mulching film), and the like.

### [Advantageous Effects]

According to the present disclosure, a polyester polyol copolymer that is excellent in biodegradability and exhibits excellent physical properties such as tensile strength and elastic modulus and at the same time, has improved elongation, and a preparation method of polyester polyol copolymer can be provided.

### [DETAILED DESCRIPTION OF THE EMBODIMENTS]

Hereinafter, the present disclosure will be explained in detail with reference to the following examples. However, these examples are for illustrative purposes only, and the scope of the present disclosure is not limited thereto.

### <Examples and Comparative Examples>

### Example 1

90 g (0.03 mol) of poly(trimethylene ether) glycol (n=33, number average molecular weight: 3000 g/mol), 189 g (1.63 mol) of glycolide and 21 g (0.15 mol) of lactide were added to a 500 mL Teflon-coated round flask, and the temperature was adjusted to room temperature.

After 135 mg of tin(II) 2-ethylhexanoate was added to the flask, the flask was placed in an oil bath, the temperature was raised to 220°C under a nitrogen atmosphere, and the mixture was subjected to ring-opening polymerization reaction while stirring at 200 rpm for 2 hours. After the reaction was completed, the remaining monomer was removed through a devolatilization step of the product to obtain a polyester polyol copolymer.

### Example 2

A polyester polyol copolymer was prepared in the same manner as Example 1, except that in Example 1, 90 g (0.03 mol) of poly(trimethylene ether) glycol (n=33, number average molecular weight: 3000 g/mol), 169.3 g (1.46 mol) of glycolide, and 40.6 g (0.29 mol) of lactide were added.

### Comparative Example 1

A polyester polyol copolymer was prepared in the same manner as Example 1, except that in Example 1, 90 g (0.03 mol) of poly(trimethylene ether) glycol (n=33, number average molecular weight: 3000 g/mol) and 210 g (1.81 mol) of glycolide were added without adding lactide.

### Comparative Example 2

A polyester polyol copolymer was prepared in the same manner as Example 1, except that in Example 1, 90 g (0.03 mol) of poly(trimethylene ether) glycol (n=33, number average molecular weight: 3000 g/mol) and 210 g (1.46 mol) of lactide were added without adding glycolide, and the temperature was raised to 170°C under a nitrogen atmosphere.

### Comparative Example 3

A polyester polyol copolymer was prepared in the same manner as Example 1, except that in Example 1, 90 g (0.03 mol) of poly(trimethylene ether) glycol, n= 33, number average molecular weight: 3000 g/mol), 105 g (0.91 mol) of glycolide and 105 g (0.73 mol) of lactide were added so that the weight ratio of glycolide and lactide was 1:1.

### Comparative Example 4

A polyester polyol copolymer was prepared in the same manner as Example 1, except that in Example 1, 90 g (1.18 mol) of 1,3-propanediol, 105 g (0.91 mol) of glycolide and 105 g (0.73 mol) of lactide were added instead of poly(trimethylene ether) glycol, n= 33, number average molecular weight: 3000 g/mol).

When the temperature was raised to 220°C under a nitrogen atmosphere as in Example 1, it can be confirmed that 1,3-propanediol having a boiling point of 210°C disappears, and the content of repeating units derived from 1,3-propanediol is extremely small in the finally prepared polyester polyol copolymer.

In addition, when the temperature was raised to 190°C unlike Example 1, it can be confirmed that the glycolide was not sufficiently melted and thus, the molecular weight of the finally prepared polyester polyol copolymer was small, thus making it impossible to measure its physical properties.

### Evaluation

### (1) GPC (Gel Permeation Chromatography) analysis

The number average molecular weight (Mn) of the polyester polyol copolymers of Examples and Comparative Examples was measured using a gel permeation chromatography (GPC, Waters E2640).

Specifically, the polyester polyol copolymers of Examples and Comparative Examples were respectively dissolved in HFIP(hexafluoro isopropanol) to a concentration of 2 mg/ml, and then 20 µℓ of the dissolved solution was injected into GPC. HFIP was used as the mobile phase for GPC, the flow rate was 1.0 mL/min, and GPC analysis was carried out at 40°C. The column was two Agilent Mixed-B units connected in series. RI Detector was used as a detector. The values of Mw was obtained using a calibration curve formed using poly methyl methacrylate (PMMA). Nine kinds of the polystyrene standard samples were used with the weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

### (3) Evaluation of physical properties

The tensile strength, Young's modulus, and tensile elongation of the polyester polyol copolymers of Examples and Comparative Examples were measured.

Specifically, the evaluation was conducted according to ASTM D638. ASTM D536 V Type specimens were produced at 190°C to 200°C using a hot-press device (Limotem QM900S), and then measured using a UTM device (Universal Testing Machine) under a load of 10 mm/s, 60 kg/f.

**[Table 1]**

| | Number average molecular weight (g/mol) | Tensile strength (MPa) | Young's modulus (MPa) | Tensile elongation (%) |
|---|---|---|---|---|
| Example 1 | 39500 | 17 | 970 | 290 |
| Example 2 | 38000 | 25 | 885 | 245 |
| Comparative Example 1 | 34000 | 52 | 1060 | 85 |
| Comparative Example 2 | 25200 | 24 | 186 | 90 |
| Comparative Example 3 | 34800 | 40 | 640 | 120 |
| Comparative Example 4 | Measurement impossible | Measurement impossible | Measurement impossible | Measurement impossible |

According to Table 1, it could be confirmed that the polyester polyol copolymers of Examples exhibited a tensile elongation of 245% or more, so that the elongation was ensured, which made it possible to measure the physical properties by thermoforming and processing.

On the other hand, it could be confirmed that the polyester polyol copolymers of Comparative Examples 1 to 3 exhibited a tensile elongation of 120% or less, showing poor tensile elongation as compared to Examples.

In addition, it was confirmed that the polyester polyol copolymer of Comparative Example 4 could not be measured for its physical properties.

### (4) Measurement of biodegradation degree

The biodegradation degree of cellulose, which is a standard material, and the polyester polyol copolymers of Examples and Comparative Examples was measured under home composting conditions of EN17427.

Specifically, under home composting conditions (28°C, aerobic compost conditions), the moisture content in the compost was set to 50%, and then the compost and the polymer were mixed at a weight ratio of 10:1 to measure the CO₂ generated. The degradation (%) refers to a value obtained by calculating the mass degraded into water and CO₂ based on the initial mass of the sample. In addition, for comparison, the results were compared with the biodegradation measurement results of cellulose (Sigma Aldrich, Cellulose, Cat. No. 310697), which is a standard substance.

As a result of degradation measurement of the polyester polyol copolymer of Example 1, it could be confirmed that the copolymers was decomposed by about 29% or more based on its initial mass within 30 days. Through this, it was confirmed that the block polyester polyol copolymer of Example 1 had biodegradable properties even under relatively mild home composting conditions.

## Claims

1. A polyester polyol copolymer comprising:
a repeating unit represented by the following Chemical Formula 1, a repeating unit represented by the following Chemical Formula 2, and a repeating unit represented by the following Chemical Formula 3,
wherein the repeating unit represented by Chemical Formula 3 is contained in an amount of 95 parts by weight or less based on 100 parts by weight of the repeating unit represented by Chemical Formula 2: 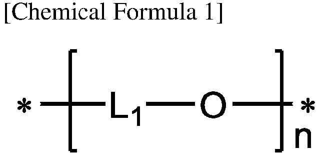 wherein in Chemical Formula 1,
the L₁ is an alkylene group having 3 or less carbon atoms, and
n is an integer of 3 or more, 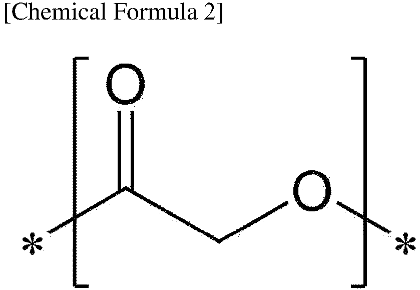 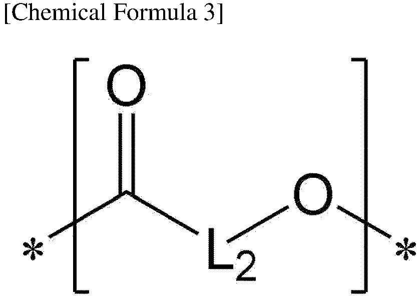
wherein in Chemical Formula 3,
the L₂ is an alkylene group having 2 or more carbon atoms.

2. The polyester polyol copolymer according to claim 1, wherein:
the repeating unit represented by Chemical Formula 3 is contained in an amount of 0.01 mole or more and less than 0.25 mole per one mole of the repeating unit represented by Chemical Formula 2.

3. The polyester polyol copolymer according to claim 1, wherein:
the repeating unit represented by Chemical Formula 1 includes a repeating unit represented by the following Chemical Formula 1-1: 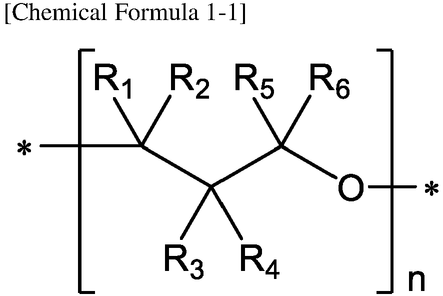 wherein in Chemical Formula 1-1,
R₁ to R₆ are each independently hydrogen or an alkyl group, and
n is an integer of 5 or more.

4. The polyester polyol copolymer according to claim 1, wherein:
in Chemical Formula 1, n is an integer of 5 or more and 5000 or less.

5. The polyester polyol copolymer according to claim 1, wherein:
the polyester polyol copolymer contains the repeating unit represented by Chemical Formula 1 in an amount of 5% by weight or more and 95% by weight or less based on the all repeating units.

6. The polyester polyol copolymer according to claim 1, wherein:
the repeating unit represented by Chemical Formula 2 is contained in an amount of 10 moles or more per one mole of the repeating unit represented by Chemical Formula 1.

7. The polyester polyol copolymer according to claim 1, wherein:
the repeating unit represented by Chemical Formula 3 is contained in an amount of 1.1 moles or more per one mole of the repeating unit represented by Chemical Formula 1.

8. The polyester polyol copolymer according to claim 1, wherein:
the copolymer includes a repeating unit represented by the following Chemical Formula 7: 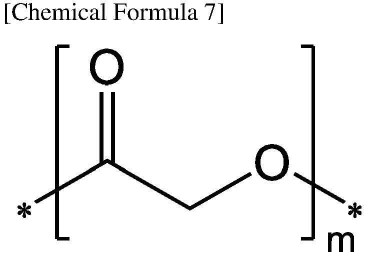 wherein in Chemical Formula 7,
m is an integer of 2 or more.

9. The polyester polyol copolymer according to claim 1, wherein:
the copolymer includes a repeating unit represented by the following Chemical Formula 8: 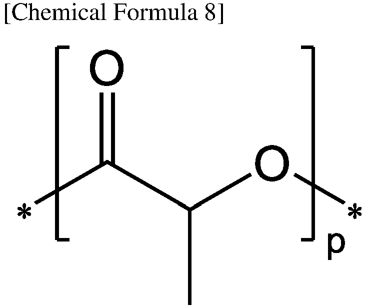 wherein in Chemical Formula 8,
p is an integer of 2 or more.

10. The polyester polyol copolymer according to claim 1, wherein:
the copolymer includes a structure in which any one selected from a repeating unit represented by the following Chemical Formula 7 and a repeating unit represented by the following Chemical Formula 8 is bonded to both ends of the functional group of the following Chemical Formula 9. 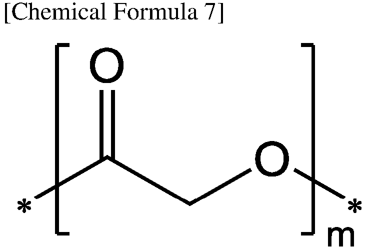 wherein in Chemical Formula 7,
m is an integer of 2 or more, 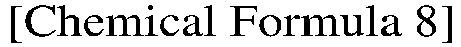 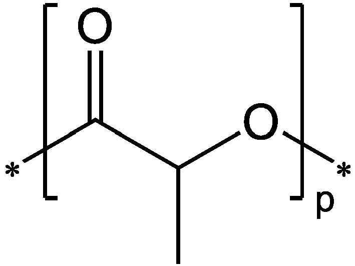 wherein in Chemical Formula 8,
p is an integer of 2 or more,

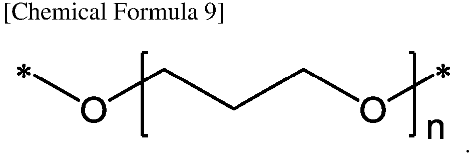

11. The polyester polyol copolymer according to claim 1, wherein:
the polyester polyol copolymer has a weight average molecular weight of 10,000 g/mol or more and 500,000 g/mol or less.

12. The polyester polyol copolymer according to claim 1, wherein:
the polyester polyol copolymer has a tensile elongation of 100% or more.

13. A preparation method of a polyester polyol copolymer, comprising:
subjecting a glycolide monomer and a monomer represented by the following Chemical Formula 5 to ring-opening polymerization in the presence of a compound represented by the following Chemical Formula 4 to prepare a polyester polyol copolymer,
wherein the repeating unit represented by Chemical Formula 5 is contained in an amount of 95 parts by weight or less based on 100 parts by weight of the glycolide monomer: 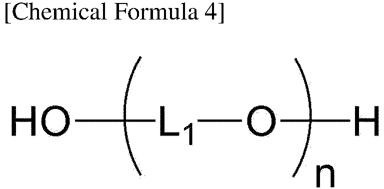 wherein in Chemical Formula 4,
the L₁ is an alkylene group having 3 or less carbon atoms, and
n is an integer of 5 or more, 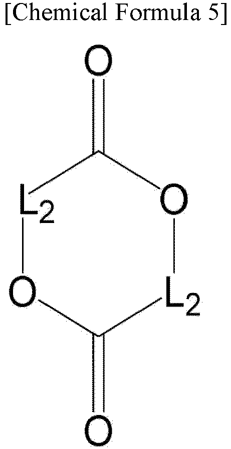 wherein in Chemical Formula 5,
the L₂ is an alkylene group having 2 or more carbon atoms.

14. The preparation method of a polyester polyol copolymer according to claim 13, wherein:
the polyester polyol copolymer contains the repeating unit derived from the compound represented by Chemical Formula 4 in an amount of 5% by weight or more and 95% by weight or less based on the total repeating units.

15. The preparation method of a polyester polyol copolymer according to claim 13, wherein:
the compound represented by Chemical Formula 4 has a weight average molecular weight of 500 g/mol to 10,000 g/mol.

16. The preparation method of a polyester polyol copolymer according to claim 13, wherein:
the subjecting a glycolide monomer and the monomer represented by Chemical Formula 5 to ring-opening polymerization in the presence of the compound represented by Chemical Formula 4 to prepare a polyester polyol copolymer is carried out in the presence of a catalyst represented by the following Chemical Formula 6:
[Chemical Formula 6] MA¹ₚA²₂₋ₚ
wherein in Chemical Formula 6,
M is Al, Mg, Zn, Ca, Sn, Fe, Y, Sm, Lu, Ti or Zr,
p is an integer of 0 to 2,
A¹ and A² are each independently an alkoxy or carboxyl group.

17. The preparation method of a polyester polyol copolymer according to claim 16, wherein:
in the subjecting a glycolide monomer and the monomer represented by Chemical Formula 5 to ring-opening polymerization in the presence of the compound represented by Chemical Formula 4 to prepare a polyester polyol copolymer
the catalyst represented by Chemical Formula 6 is contained in an amount of 0.001 parts by weight or less based on total 100 parts by weight of the compound represented by Chemical Formula 4, the glycolide monomer, and the monomer represented by Chemical Formula 5.

18. The preparation method of a polyester polyol copolymer according to claim 16, wherein:
the catalyst is tin(II) 2-ethylhexanoate.

19. A molded article molded from a resin composition comprising the polyester polyol copolymer according to claim 1.

20. The molded article according to claim 19, wherein
The molded article includes one or more molded articles selected from the group consisting of an injection molded article, an extrusion molded article, an inflation molded article, a fiber, a nonwoven fabric, a foaming body, a film, and a sheet.
